(19) Europäisches Patentamt
European Patent Office
Office européen des brevets

(11) Veröffentlichungsnummer: **0 464 542 A2**

(12) **EUROPÄISCHE PATENTANMELDUNG**

(21) Anmeldenummer: **91110346.3**

(22) Anmeldetag: **22.06.91**

(51) Int. Cl.[5]: **A01N 25/32**, A01N 43/16, A01N 43/18, A01N 43/36, A01N 43/40, A01N 43/56, A01N 43/78, A01N 43/80

(30) Priorität: **03.07.90 US 547305**

(43) Veröffentlichungstag der Anmeldung: **08.01.92 Patentblatt 92/02**

(84) Benannte Vertragsstaaten: **AT BE CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Misslitz, Ulf, Dr.**
**Am Herzel 40**
**W-6730 Neustadt(DE)**
Erfinder: **Meyer, Norbert Dr.**
**Dossenheimer Weg 22**
**W-6802 Ladenburg(DE)**
Erfinder: **Kast, Jürgen, Dr.**
**Kastanienstrasse 24**
**W-6737 Boehl-Iggelheim(DE)**
Erfinder: **Carlson, Dale R., Dr.**
**107 King Street**
**Hillsborough N.C. 27278(US)**
Erfinder: **Westphalen, Karl-Otto, Dr.**
**Mausbergweg 58**
**W-6720 Speyer(DE)**
Erfinder: **Würzer, Bruno, Dr.**
**Rüdigerstrasse 13**
**W-6701 Otterstadt(DE)**

(54) **Herbizide Mittel aus Cyclohexenon-Derivaten und 1,8-Naphthalindicarbonsäureanhydrid als Antidot.**

(57) Herbizide Mittel, enthaltend 1,8-Naphthalindicarbonsäureanhydrid und mindestens einen herbiziden Wirkstoff aus der Gruppe der Cyclohexenone I,

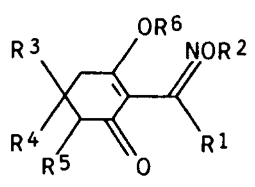

I

in welcher die Substituenten folgende Bedeutung haben:

$R^1$ $C_1$-$C_4$-Alkyl;

$R^2$ $C_1$-$C_4$-Alkyl; ggf. subst. $C_3$-$C_4$-Alkenyl, ggf. subst. Thenyl; oder einen Rest

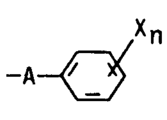

mit

A = ggf. substtuiertes $C_4$-Alkylen oder $C_4$-Alkenylen;

X = $NO_2$; CN; Carboxyl; Halogen; $C_1$-$C_4$-Alkyl; $C_1$-$C_4$-Alkoxy; $C_1$-$C_4$-Alkylthio; $C_1$-$C_4$-Halogenalkyl; $C_1$-

EP 0 464 542 A2

$C_4$-Halogenalkoxy; $C_1$-$C_4$-Alkoxycarbonyl; ggf. subst. Benzyloxycarbonyl und ggf. subst. Phenyl;
n = 0-3 oder 1-5 für den Fall, daß X für Halogen steht;

$R^3$ ggf. substituiertes $C_1$-$C_4$-Alkyl;
ggf. substituiertes 5- oder 6-gliedriges gesättigtes oder einfach ungesättigtes Ringsystem, welches neben Kohlenstoffgliedern ein Sauerstoff-, ein Schwefelatom oder eine Sulfoxid- oder Sulfongruppe enthalten kann;
ggf. substituiertes Phenyl, Pyridyl, Pyrrolyl, Furyl, Thienyl, Imidazolyl, Pyrazolyl, Isoxazolyl, Isothiazolyl, Oxazolyl, Thiazolyl, Oxadiazolyl, Thiadiazolyl;

$R^4$ H, OH oder, wenn $R^3$ für eine $C_1$-$C_6$-Alkyl steht, $C_1$-$C_6$-Alkyl

$R^5$ H, CN, Halogen, $C_1$-$C_4$-Alkoxycarbonyl oder $C_1$-$C_4$-Alkylketoxim und

$R^6$ H oder das Äquivalent eines landwirtschaftlich brauchbaren Kations,

wobei $R^3$ nicht für 2-(Ethylthio)propyl steht, wenn $R^1$ Propyl und $R^2$ Ethyl bedeutet, sowie Verfahren zu ihrer Anwendung.

Die vorliegende Erfindung betrifft herbizide Mittel, enthaltend 1,8-Naph-thalindicarbonsäureanhydrid und mindestens einen herbiziden Wirkstoff aus der Gruppe der Cyclohexenone der Formel I,

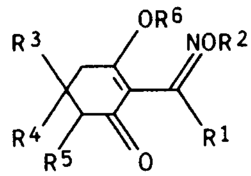

I

in welcher die Substituenten folgende Bedeutung haben:

$R^1$ eine $C_1$-$C_4$-Alkylgruppe;

$R^2$ eine $C_1$-$C_4$-Alkylgruppe; eine $C_3$-$C_4$-Alkenylgruppe, welche ein bis drei Halogenatome tragen kann; eine $C_3$-$C_4$-Alkinylgruppe; eine Thenylgruppe, welche durch ein Halogenatom substituiert sein kann;
oder ein Rest

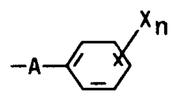

in dem

A eine $C_4$-Alkylen- oder $C_4$-Alkenylenkette bedeutet, wobei diese Ketten ein bis drei $C_1$-$C_3$-Alkylgruppen und ein bis drei Halogenatome oder wobei diese Ketten ein bis drei $C_1$-$C_3$-Alkylgruppen oder ein bis drei Halogenatome tragen können;

X Nitro; Cyano; Carboxyl; Halogen; $C_1$-$C_4$-Alkyl; $C_1$-$C_4$-Alkoxy; $C_1$-$C_4$-Alkylthio; partiell oder vollständig halogeniertes $C_1$-$C_4$-Alkyl; partiell oder vollständig halogeniertes $C_1$-$C_4$-Alkoxy; $C_1$-$C_4$-Alkoxycarbonyl; Benzyloxycarbonyl und Phenyl bedeutet, wobei die aromatischen Reste ein bis drei der folgenden Gruppen tragen können: Nitro, Cyano, Carboxyl, Halogen, $C_1$-$C_4$-Alkyl, $C_1$-$C_4$-Alkoxy, $C_1$-$C_4$-Alkylthio, partiell oder vollständig halogeniertes $C_1$-$C_4$-Alkyl, partiell oder vollständig halogeniertes $C_1$-$C_4$-Alkyloxy, $C_1$-$C_4$-Alkoxycarbonyl und Benzyloxycarbonyl und

n 0, 1, 2 oder 3 bedeutet oder 1 bis 5 für den Fall, daß X für Halogenatome steht, wobei die Reste X verschieden sein können, wenn n größer als 1 ist;

$R^3$ eine $C_1$-$C_4$-Alkylgruppe, welche ein- oder zweifach durch $C_1$-$C_4$-Alkylthio oder $C_1$-$C_4$-Alkoxy substituiert sein kann;
ein 5- oder 6-gliedriges gesättigtes oder einfach ungesättigtes Ringsystem, welches neben Kohlenstoffgliedern ein Sauerstoff-, ein Schwefelatom oder eine Sulfoxid- oder Sulfongruppe enthalten kann, wobei dieser Ring ein bis drei der folgenden Reste tragen kann: Hydroxy, Halogen, $C_1$-$C_4$-Alkyl, partiell oder vollständig halogeniertes $C_1$-$C_4$-Alkyl, $C_1$-$C_4$-Alkoxy und $C_1$-$C_4$-Alkylthio;
die Phenylgruppe, die Pyridylgruppe, die Pyrrolylgruppe, die Furylgruppe, die Thienylgruppe, die Imidazolylgruppe, die Pyrazolylgruppe, die Isoxazolylgruppe, die Isothiazolylgruppe, die Oxazolylgruppe, die Thiazolylgruppe, die Oxadiazolylgruppe, die Thiadiazolylgruppe, wobei diese Gruppen ein bis drei der folgenden Reste tragen können: $C_1$-$C_4$-Alkyl, partiell oder vollständig halogeniertes $C_1$-$C_4$-Alkyl, $C_1$-$C_4$-Alkoxy, $C_1$-$C_4$-Alkylthio, $C_3$-$C_6$-Alkenyloxy, $C_3$-$C_6$-Alkinyloxy, Di-($C_1$-$C_4$)-alkoxy-$C_1$-$C_3$-alkyl, Formyl, Halogen und Benzoylamino;

$R^4$ Wasserstoff, Hydroxy oder, wenn $R^3$ für eine $C_1$-$C_6$-Alkylgruppe steht, eine $C_1$-$C_6$-Alkylgruppe;

$R^5$ Wasserstoff, die Cyanogruppe, ein Halogenatom, eine $C_1$-$C_4$-Alkoxycarbonylgruppe oder eine $C_1$-$C_4$-Alkylketoximgruppe und

$R^6$ Wasserstoff oder das Äquivalent eines landwirtschaftlich brauchbaren Kations,

wobei $R^3$ nicht für 2-(Ethylthio)propyl steht, wenn $R^1$ Propyl und $R^2$ Ethyl bedeutet.

Außerdem betrifft die Erfindung Verfahren zur selektiven Bekämpfung unerwünschter Pflanzen und zur Verhinderung von Schädigungen von Kulturpflanzen mit diesen Mitteln.

Die herbiziden Cyclohexenone der Formel I sind aus der Literatur bekannt (DE-A 24 39 104, DE-A 2 822 304, DE-A 38 08 072, DE-A 38 38 309, EP-A 46 860, EP-A 66 195, EP-A 71 707, EP-A 88 299, EP-A 88 301, EP-A 115 808, EP-A 125 094, EP-A 137 174, EP-A 137 200, EP-A 142 741, EP-A 172 551, EP-A

228 598, EP-A 230 235, EP-A 230 260, EP-A 238 021, US-A 44 40 566, JP-A 54 191 945, Proc. Brit. Crop-Protect. Conf.-Weeds 1, Seiten 93-98, 1985).

Es ist außerdem bekannt, daß die herbizide Wirkung von (2-[1-(Ethoxyimino)butyl]-5-[2-(ethylthio)-propyl]-3-hydroxy-2-cyclohexen-1-on (Common name: Sethoxydim) bei Kultursorghum und Mais durch eine Samenbeizung oder Vorauflaufanwendung mit 1,8-Naphthalindicarbonsäureanhydrid antidotisiert wird (Weed Res. 24, 249 (1984), Weed Sci 32, 51 (1984)).

Aufgabe der vorliegenden Erfindung war es, Substanzen zu finden, die die durch Cyclohexenone an einem breiten Spektrum von Kulturpflanzen aus der Familie der Gramineen hervorgerufenen Schäden auch bei Anwendung im Nachauflaufverfahren beseitigen oder zumindest auf ein landwirtschaftlich akzeptables Maß reduzieren.

Demgemäß wurde gefunden, daß 1,8-Naphthalindicarbonsäureanhydrid die herbizide Wirkung der vorstehend definierten Cyclohexenone der Formel I in einer Vielzahl von Gramineen-Kulturen zu antidotisieren vermag.

1,8-Naphthalindicarbonsäureanhydrid ist insbesondere geeignet die herbizide Wirkung der Cyclohexenone der Formel I zu antidotisieren, in denen die Substituenten folgende Bedeutung haben:

$R^1$ Alkyl wie Methyl, Ethyl, Propyl, 1-Methylethyl, Butyl, 1-Methylpropyl, 2-Methylpropyl und 1,1-Dimethylethyl, insbesondere Ethyl und Propyl;

$R^2$ Alkyl wie bei $R^1$ genannt, insbesondere Ethyl und Propyl; Alkenyl wie 2-Propenyl, 2-Butenyl, 3-Butenyl und 1-Methyl-2-propenyl, insbesondere 2-Propenyl, 2-Butenyl und 3-Butenyl, welches ein bis drei Halogenatome wie Fluor, Chlor und Brom, insbesondere Fluor und Chlor tragen kann; bevorzugt ist 3-Chlor-propen-2-yl;

Alkinyl wie 2-Propinyl, 2-Butinyl, 3-Butinyl und 1-Methyl-2-propinyl, insbesondere 2-Propinyl und 2-Butinyl;

Thenyl, welches ein bis drei Halogenatome wie vorstehend genannt tragen kann;

oder eine Gruppe

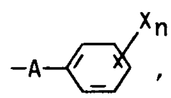

in der

A Butylen, 1-Butenylen, 2-Butenylen oder 3-Bentenylen, insbesondere 2-Butenylen und 3-Butenylen, bedeutet, wobei diese Ketten ein bis drei der bei $R^1$ genannten $C_1$-$C_3$-Alkylreste, insbesondere Methyl- oder Ethylreste und/oder ein bis drei Halogenatome wie vorstehend genannt, insbesondere Fluor- oder Chloratome tragen können; bevorzugt ist 3-Butenylen;

X für Nitro, Cyano, Carboxyl,

Halogen wie vorstehend genannt, insbesondere Fluor und Chlor;

Alkyl wie vorstehend genannt, insbesondere Methyl und 1,1-Dimethylethyl;

Alkoxy wie Methoxy, Ethoxy, Propyloxy, 1-Methylethoxy, Butyloxy, 1-Methylpropyloxy, 2-Methylpropyloxy und 1,1-Dimethylethoxy, insbesondere Methoxy, Ethoxy, 1-Methylethoxy und 1,1-Dimethylethoxy;

Alkylthio wie Methylthio, Ethylthio, Propylthio, 1-Methylethylthio, Butylthio, 1-Methylpropylthio, 2-Methylpropylthio und 1,1-Dimethylethylthio, insbesondere Methylthio und Ethylthio;

partiell oder vollständig halogeniertes Alkyl wie Fluormethyl, Difluormethyl, Trifluormethyl, Chlordifluormethyl, Dichlorfluormethyl, Trichlormethyl, 1-Fluorethyl, 2-Fluorethyl, 2,2-Difluorethyl, 2,2,2-Trifluorethyl, 2-Chlor-2,2-difluorethyl, 2,2-Dichlor-2-fluorethyl, 2,2,2-Trichlorethyl und Pentafluorethyl, insbesondere Difluormethyl, Trifluormethyl, 2,2,2-Trifluorethyl und Pentafluorethyl;

partiell oder vollständig halogeniertes Alkoxy wie Difluormethoxy, Trifluormethoxy, Chlordifluormethoxy, Dichlorfluormethoxy, 1-Fluorethoxy, 2-Fluorethoxy, 2,2-Difluorethoxy, 1,1,2,2-Tetrafluorethoxy, 2,2,2-Trifluorethoxy, 2-Chlor-1,1,2-Trifluorethoxy und Pentafluorethoxy, insbesondere Trifluormethoxy;

Alkoxycarbonyl wie Methoxycarbonyl, Ethoxycarbonal, Propyloxycarbonal, 1-Methylethoxycarbonyl, Butyloxycarbonyl und 1,1-Dimethylethoxycarbonyl, insbesondere Methoxycarbonyl, Ethoxycarbonyl und 1,1-Dimethylethoxycarbonyl;

Benzyloxycarbonyl und/oder Phenyl steht, wobei die aromatischen Reste ein bis drei der folgenden Gruppen tragen können: Nitro, Cyano, Carboxyl, Halogen im allgemeinen und im besonderen wie vorstehend genannt:

Alkyl im allgemeinen und im besonderen wie vorstehend bei X genannt; Alkoxy im allgemeinen und im besonderen wie vorstehend bei X genannt; Alkylthio im allgemeinen und im besonderen wie vorstehend bei X genannt;

partiell oder vollständig halogeniertes Alkyl im allgemeinen und im besonderen wie vorstehend bei X genannt;

partiell oder vollständig halogeniertes Alkoxy im allgemeinen und im besonderen wie vorstehend bei X wie vorstehend genannt, Alkoxycarbonyl im allgemeinen und im besonderen wie vorstehend bei X genannt;

und/oder Benzyloxycarbonyl und

n 0, 1, 2 oder 3 bedeuten oder 1 bis 5 für den Fall, daß x für Halogenatome steht, wobei die Reste verschieden sein können, wenn m ≧ 2;

X bedeutet bevorzugt Halogen, besonders bevorzugt Fluor und n steht bevorzugt für 1;

$R^3$ Alkyl wie bei $R^1$ genannt, insbesondere Methyl und Ethyl, welches ein oder zwei der folgenden Gruppen tragen kann:

Alkoxy im allgemeinen und im besonderen wie bei $R^2$ genannt oder Alkylthio im allgemeinen und im besonderen wie bei $R^2$ genannt, bevorzugt Methylthio und Ethylthio;

besonders bevorzugt ist 2-(Ethylthio)-propyl;

ein 5- oder 6-gliedriger gesättigtes oder einfach ungesättigtes Ringsystem, welches neben Kohlenstoffgliedern ein Sauerstoff- oder ein Schwefelatom, die Sulfoxid- oder die Sulfongruppe enthalten kann, wie Cyclopentyl, Cyclopent-1-enyl, Cyclopent-2-enyl, Cyclopent-3-enyl, Cyclohexyl, Cyclohex-1-enyl, Cyclohex-2-enyl, Cyclohex-3-enyl, Tetrahydrofuran-2-yl, Tetrahydrofuran-3-yl, Dihydrofuran-2-yl, Dihydrofuran-3-yl, Tetrahydrothien-2-yl, Tetrahydrothien-3-yl, Dihydrothien2-yl, Dihydrothien-3-yl, Tetrahydropyran-3-yl, Tetrahydropyran-4-yl, Dihydropyran-3-yl, Dihydropyran-4-yl, Tetrahydrothiopyran-3-yl, Tetrahydrothiopyran-3-yl-1-oxid, Tetrahydrothiopyran-3-yl-1,1-dioxid,Tetrahydrothiopyran-4-yl, Tetrahydrothiopyran-4-yl, -1-oxid, Tetrahydrothiopyran-4-yl, -1,1-dioxid, Dihydrothiopyran-3-yl, Dihydrothiopyran-4-yl, insbesondere Tetrahydropyran-3-yl, Tetrahydropyran4-yl und Tetrahydrothiopyran-3-yl, wobei diese Ringe ein bis drei der folgenden Gruppen tragen können:

Hydroxyl,

Halogen im allgemeinen und im besonderen wie vorstehend bei X genannt; Alkyl im allgemeinen und im besonderen wie vorstehend bei X genannt; partiell oder vollständig halogeniertes Alkyl im allgemeinen und im besonderen wie vorstehend bei X genannt;

Alkoxy im allgemeinen und im besonderen wie vorstehend bei X genannt, und/oder

Alkylthio im allgemeinen und im besonderen wie vorstehend bei X genannt;

Phenyl, Pyridyl, Pyrrolyl, Furyl, Thienyl, Imidazolyl, Pyrazolyl, Isoxazolyl, Isothiazolyl, Oxazolyl, Thiazolyl, Oxadiazolyl, Thiadiazolyl, wobei diese Reste ein bis drei der folgenden Gruppen tragen können:

unverzweigtes oder verzweigtes Alkyl im allgemeinen und im besonderen wie vorstehend bei X genannt;

Halogenalkyl im allgemeinen und im besonderen wie vorstehend bei X genannt;

Alkoxy im allgemeinen und im besonderen wie vorstehend bei X genannt; Alkylthio im allgemeinen und im besonderen wie vorstehend bei X genannt;

Alkenyloxy wie 2-Propenyloxy, 2-Butenyloxy, 3-Butenyloxy, 1-Methyl-2-propenyloxy, 2-Methyl-2-propenyloxy, 2-Pentenyloxy, 3-Pentenyloxy, 4-Pentenyloxy, 1-Methyl-2-butenyloxy, 2-Methyl-2-butenyloxy, 3-Methyl-2-butenyloxy, 1-Methyl-3-butenyloxy, 2-Methyl-3-butenyloxy, 3-butenyloxy, 3-Methyl-3-butenyloxy, 1,1-Dimethyl-2-propenyloxy, 1,2-Dimethyl-2-propenyloxy, 1-Ethyl-2-propenyloxy, 2-Hexenyloxy, 3-Hexenyloxy, 4-Hexenyloxy, 5-Hexenyloxy, 1-Methyl-2-pentenyloxy, 2-Methyl-2-pentenyloxy, 3-Methyl-2-pentenyloxy, 4-Methyl-2-pentenyloxy, 1-Methyl-3-pentenyloxy, 2-Methyl-3-pentenyloxy, 3-Methyl-3-pentenyloxy, 4-Methyl-3-pentenyloxy, 2-Methyl-4-pentenyloxy, 3-Methyl-4-pentenyloxy, 4-Methyl-4-pentenyloxy, 1,1-Diemethyl-2-butenyloxy, 1,1-Dimethyl3-butenyloxy, 1,3-Dimethyl-2-butenyloxy, 1,3-Dimethyl-3-butenyloxy, 2,2-Dimethyl-3-butenyloxy, 2,3-Dimethyl-2-butenyloxy, 2,3-Dimethyl-3-butenyloxy, 1-Ethyl-2-butenyloxy, 2-Ethyl-2-butenyloxy, -1-Ethyl-3-butenyl-oxy, 2-Ethyl-3-butenyloxy, 1,1,2-Trimethyl-2-propenyloxy, 1-Ethyl-1-methyl-2-propenyloxy und 1-Ethyl-2-methyl-2-propenyloxy, insbesondere 2-Propenyloxy und 2-Butenyloxy;

Alkinyloxy wie 2-Propinyloxy, 2-Butinyloxy, 3-Butinyloxy, 1-Methyl-2-propinyloxy, 2-Pentinyloxy, 3-Pentinyloxy, 4-Pentinyloxy, 1-Methyl-3-butinyloxy, 2-Methyl-3-butinyloxy, 1-Methyl-2-butinyloxy, 1,1-Dimethyl-2-propinyloxy, 1-Ethyl-2-propinyloxy, 2-Hexinyloxy, 4-Hexinyloxy, 5-Hexinyloxy, 1-Methyl-2-pentinyloxy, 1-Methyl-3-pentinyloxy, 1-Methyl-4-pentinyloxy, 2-Methyl-3-pentinyloxy, 2-Methyl-4-pentinyloxy, 3-Methyl-4-pentinyloxy, 4-Methyl-2-pentinyloxy, 1,1-Dimethyl-2-butinyloxy, 1,1-Dimethyl-3-butinyloxy, 2,2-Dimethyl-3-butinyloxy, 1-Ethyl-2-butinyloxy, 1-Ethyl-3-butinyloxy, 2-Ethyl-3-butinyloxy und 1-Ethyl-1-methyl-2-propinyloxy, insbesondere 2-Propinyloxy und 2-Butinyloxy;

Dialkoxyalkyl wie Dimethoxymethyl, Diethoxymethyl, Dipropoxymethyl, Dipropoxymethyl, Dibutoxymethyl, 1,1-Dimethoxyethyl, 1,1-Diethoxyethyl, 1,1-Dipropoxyethyl, 1,1-Dibutoxyethyl, 1,1-Dimethoxypropyl, 1,1-Diethoxypropyl, 1,1-Dipropoxypropyl, 1,1-Dibutoxypropyl, insbesondere Dimethoxymethyl und Diethoxymethyl;

Formyl;

Halogen wie im allgemeinen und im besonderen bei X genannt, und/oder Benzoylamino;

unter den aromatischen Resten $R^1$ ist die 2,4,6-Trimethylphenylgruppe besonders bevorzugt;

$R^4$ Wasserstoff; Hydroxy;
oder wenn $R^3$ für Alkyl steht ebenfalls Alkyl im allgemeinen und im besonderen wie bei $R^3$ genannt;

$R^5$ Wasserstoff; Cyano;
Halogen im allgemeinen und im besonderen wie bei X genannt; Alkoxycarbonyl im allgemeinen und im besonderen wie bei X genannt, oder
Alkylketoxim wie Hydroxyiminomethyl, 1-(Hydroxyimino)ethyl, 1-(Hydroxyimino)propyl, 1-(Hydroxyimino)propyl, 1-(Hydroxyimino)butyl, insbesondere Hydroxyiminomethyl;

$R^6$ Wasserstoff oder das Äquivalent eines landwirtschaftlich brauchbaren Kations,

wobei $R^3$ nicht für 2-(Ethylthio)propyl steht, wenn $R^1$ Propyl und $R^2$ Ethyl bedeutet.

Im Hinblick auf die Anwendung zusammen mit 1,8-Naphthalindicarbonsäureanhydrid werden besonders die folgenden Cyclohexenone der Formel I bevorzugt:

Tabelle

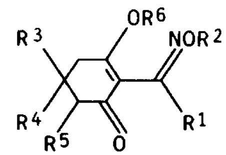

I

| Beispiel Nr. | $R^1$ | $R^2$ | $R^3$ | $R^4$ | $R^5$ | $R^6$ | Literatur |
|---|---|---|---|---|---|---|---|
| I.001 | $n-C_3H_7$ | $CH_2CH{=}CH_2$ | $CH_3$ | $CH_3$ | $CO_2CH_3$ | $Na^{\oplus}$ | DE-A 24 39 104 |
| I.002 | $C_2H_5$ | (E)-$CH_2CH{=}CHCl$ | $CH_2CH(CH_3)SCH_2CH_3$ | H | H | H | US-A 4 440 566 |
| I.003 | $n-C_3H_7$ | (E)-$CH_2CH{=}CHCl$ | $CH_2CH(CH_3)SCH_2CH_3$ | H | H | H | US-A 4 440 566 |
| I.004 | $n-C_3H_7$ | $CH_2CH_3$ | Tetrahydrothio-pyran-3-yl | H | H | H | EP-A 71 707 |
| I.005 | $C_2H_5$ | (E)-$CH_2CH{=}CHCl$ | Tetrahydropyran--4-yl | H | H | H | EP-A 142 741 |
| I.006 | $C_2H_5$ | $CH_2CH_3$ | 2,4,6-$(CH_3)_3-C_6H_2$ | H | H | H | EP-A 88 301 |
| I.007 | $n-C_3H_7$ | (E)-$CH_2CH{=}CHCH_3$ | 2-$CH_3$-Thiazol-4-yl | H | H | H | EP-A 125 094 |
| I.008 | $C_2H_5$ | (E)-$CH_2CH{=}CH-$ $-CH_2-(4-Cl-C_6H_4)$ | Tetrahydrothio-pyran-3-yl | H | H | H | DE-A 38 38 309 |
| I.009 | $C_2H_5$ | (E)-$CH_2CH_2CH{=}$ $CH-(4-F-C_6H_4)$ | Tetrahydrothio-pyran-3-yl | H | H | H | DE-A 38 38 309 |
| I.010 | $C_2H_5$ | (E)-$CH_2CH_2-CH{=}$ $CH-(4-Cl-C_6H_4)$ | Tetrahydrothio-pyran-3-yl | H | H | H | DE-A- 38 38 309 |

Tabelle Forts.

| Beispiel Nr. | $R^1$ | $R^2$ | $R^3$ | $R^4$ | $R^5$ | $R^6$ | Literatur |
|---|---|---|---|---|---|---|---|
| I.011 | $n-C_3H_7$ | $CH_2CH_3$ | $CH_2CH(CH_3)SCH_2CH_3$ | H | H | H | DE-A 2 822 304 |
| I.012 | $C_2H_5$ | $C_2H_5$ | 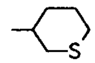 | H | H | H | EP-A 71 707 |
| I.013 | $CH_3$ | $CH_2CH{=}CHCH_3$ | 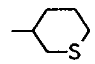 | H | H | H | EP-A 71 707 |
| I.014 | $n-C_3H_7$ | $C_2H_5$ | 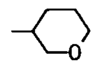 | H | H | H | EP-A 71 707 |
| I.015 | $n-C_3H_7$ | $C_2H_5$ | 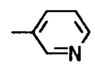 | H | H | H | EP-A 66 195 |
| I.016 | $C_2H_5$ | $C_2H_5$ | 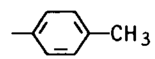 | H | H | H | DE-A 24 39 104 |
| I.017 | $C_2H_5$ | $CH_2CH{=}CHCH_3$ | 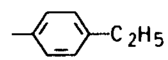 | H | H | H | DE-A 38 08 072 |
| I.018 | $n-C_3H_7$ | $CH_2CH{=}CHCl$ | 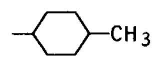 | H | H | H | EP-A 88 299 |

Tabelle (Forts.)

| Beispiel Nr. | $R^1$ | $R^2$ | $R^3$ | $R^4$ | $R^5$ | $R^6$ | Literatur |
|---|---|---|---|---|---|---|---|
| I.019 | $n-C_3H_7$ | $CH_2CH=CHCH_3$ | 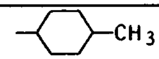 | H | H | H | EP-A 88 299 |
| I.020 | $C_2H_5$ | $CH_2CH=CHCH_3$ | 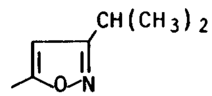 | H | H | H | DE-A 238 021 |
| I.021 | $n-C_3H_7$ | $CH_2CH=CHCH_3$ | 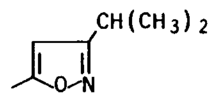 | H | H | H | EP-A 238 021 |
| I.022 | $C_2H_5$ | $CH_2CH=CHCl$ | 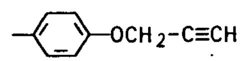 | H | H | H | EP-A 137 174 |
| I.023 | $n-C_3H_7$ | $C_2H_5$ | 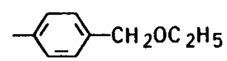 | H | H | H | EP-A 137 200 |
| I.024 | $n-C_3H_7$ | $C_2H_5$ | 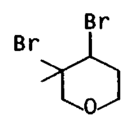 | H | H | H | EP-A 230 235 |
| I.025 | $n-C_3H_7$ | $CH_2CH=CHCl$ | 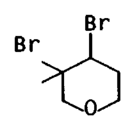 | H | H | H | EP-A 230 235 |

Tabelle (Forts.)

| Beispiel Nr. | $R^1$ | $R^2$ | $R^3$ | $R^4$ | $R^5$ | $R^6$ | Literatur |
|---|---|---|---|---|---|---|---|
| I.026 | $n-C_3H_7$ | $CH_2CH=CHCl$ | 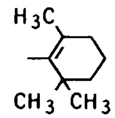 | H | H | H | EP-A 230 235 |
| I.027 | $n-C_3H_7$ | $C_2H_5$ | 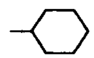 | H | H | H | JP-A 540 191 945 |
| I.028 | $n-C_3H_7$ | $C_2H_5$ | 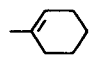 | H | H | H | EP-A 46 860 |
| I.029 | $CH_3$ | $CH_2CH=CHCl$ | 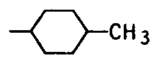 | H | H | H | EP-A 88 299 |
| I.030 | $n-C_3H_7$ | $C_2H_5$ | 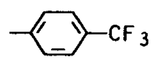 | H | H | K | EP-A 137 174 |
| I.031 | $C_2H_5$ | $CH_2CH=CHCl$ | 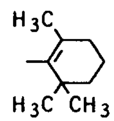 | H | H | H | EP-A 46 235 |
| I.032 | $n-C_3H_7$ | $CH_2CH=CHCl$ | 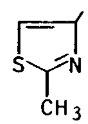 | H | H | H | EP-A 125 094 |

Tabelle (Forts.)

| Beispiel Nr. | $R^1$ | $R^2$ | $R^3$ | $R^4$ | $R^5$ | $R^6$ | Literatur |
|---|---|---|---|---|---|---|---|
| I.033 | $n-C_3H_7$ | $C_2H_5$ | 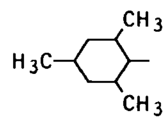 | H | H | H | EP-A 88 299 |
| I.034 | $n-C_3H_7$ | $CH_2CH=CH_2$ | 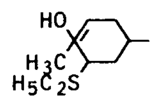 | H | H | H | EP-A 228 598 |
| I.035 | $C_2H_5$ | $C_2H_5H=CHCl$ | 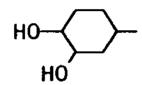 | H | H | H | EP-A 228 598 |
| I.036 | $n-C_3H_7$ | $C_2H_5$ | 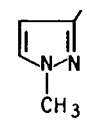 | H | H | H | EP-A 66 195 |
| I.037 | $n-C_3H_7$ | $CH_2CH=CHCl$ | 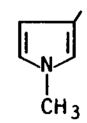 | H | H | H | EP-A 66 195 |
| I.038 | $n-C_3H_7$ | $CH_2CH=CH_2$ | 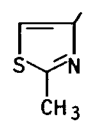 | H | H | H | EP-A 66 195 |

Tabelle (Forts.)

| Beispiel Nr. | R1 | R2 | R3 | R4 | R5 | R6 | Literatur |
|---|---|---|---|---|---|---|---|
| I.039 | n-$C_3H_7$ | $C_3H_7$ | $CH(SCH_2CH_3)_2$ | H | H | H | EP-A 230 260 |
| I.040 | n-$C_3H_7$ | $C_2H_5$ | 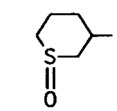 | H | H | H | EP-A 115 808 |
| I.041 | n-$C_3H_7$ | $C_2H_5$ | 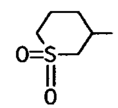 | H | H | H | EP-A 115 808 |
| I.042 | n-$C_3H_7$ | $C_2H_5$ | $CH_3$ | $CH_3$ | $C(CH_3)=NOCH_3$ | H | EP-A 115 808 |
| I.043 | n-$C_3H_7$ | $-CH_2CH=CH_2$ | 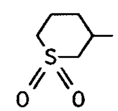 | H | H | H | Proceedings Brit. Crop-Protection Conference - weeds 1985 Vol. 1 S. 93-98 |
| I.044 | n-$C_3H_7$ | $-(CH_2)_2CH=CH-$ 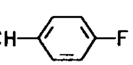 | 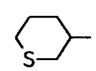 | H | H | H | DE-A 38 38 309 |

Tabelle (Forts.)

| Beispiel Nr. | R1 | R2 | R3 | R4 | R5 | R6 | Literatur |
|---|---|---|---|---|---|---|---|
| I.045 | $n-C_3H_7$ | $-CH_2-$ 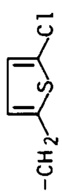 | 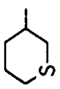 | H | H | H | |
| I.046 | $C_2H_5$ | $-CH_2-$ 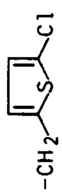 | 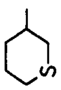 | H | H | H | |
| I.047 | $C_2H_5$ | $-CH_2-$ 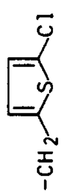 | 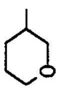 | H | H | H | |
| I.048 | $n-C_3H_7$ | $-CH_2-$ 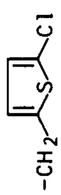 | 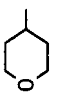 | H | H | H | |
| I.049 | $n-C_3H_7$ | $-CH_2-$ 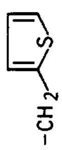 | 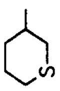 | H | H | H | |
| I.050 | $CH_3$ | $-CH_2-$ 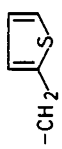 | 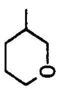 | H | H | H | |
| I.051 | $C_2H_5$ | $-CH_2-$ 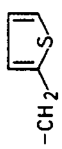 | 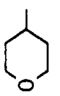 | H | H | H | |

Als Salze der Verbindungen der Formel I kommen landwirtschaftlich brauchbare Salze, beispielsweise Alkalimetallsalze, wie das Kalium- oder Natriumsalz, Erdalkalimetallsalze, wie das Calcium-, Magnesium- oder Bariumsalz, Mangan-, Kupfer-, Zink- oder Eisensalze sowie Ammonium, Phosphonium-, Sulfonium- oder Sulfoxoniumsalze, beispielsweise Ammoniumsalze, Tetraalkylammoniumsalze, Benzyltrialkylammoniumsalze, Trialkylsulfoniumsalze oder Trialkylsulfoxoniumsalze in Betracht.

Der herbizide Wirkstoff und 1,8-Naphthalindicarbonsäureanhydrid können gemeinsam oder getrennt nach dem Auflaufen auf die Blätter und Sprosse der Kulturpflanzen und der unerwünschten Gräser ausgebracht werden. Bevorzugt wird das antidotisch wirkende Mittel gleichzeitig mit dem herbiziden Wirkstoff ausgebracht. Auch eine getrennte Ausbringung, wobei das Antidot zuerst und anschließend der herbizide Wirkstoff auf das Feld gebracht werden, ist möglich. Herbizider Wirkstoff und Antidot können hierbei als Spritzmittel in suspendierbarer, emulgierbarer oder löslicher Form gemeinsam oder getrennt formuliert vorliegen.

Denkbar ist auch eine Behandlung der Kulturpflanzensamen mit dem Antidot vor der Aussaat. Der herbizide Wirkstoff wird dann allein in der üblichen Weise appliziert.

Für das gleiche Cyclohexenonderivat I werden unterschiedliche Mengen der antidotisch wirkenden Verbindung benötigt, wenn das Cyclohexenonderivat I in verschiedenen Kulturen eingesetzt wird. Die Mengenverhältnisse, in denen ein Cyclohexenonderivat und 1,8-Naphthalindicarbonsäureanhydrid eingesetzt werden, sind in breiten Bereichen variabel. Sie sind abhängig von der Struktur des Cyclohexenonderivats und der jeweiligen Kultur. Geeignete Anteilverhältnisse herbizider Wirkstoff Cyclohexenon I: 1,8-Naphthalindicarbonsäureanhydrid liegen zwischen 1:10 bis 1:0,01, vorzugsweise 1:4 bis 1:0,25 Gew.-Teile.

Die neuen herbiziden Mittel können neben 1,8-Naphthalindicarbonsäureanhydrid und dem Cyclohexenon weitere herbizide oder wachstumsregulierende Wirkstoffe anderer chemischer Struktur enthalten, wobei der antagonistische Effekt erhalten bleibt.

Die erfindungsgemäßen Mittel bzw. bei getrennter Ausbringung die herbiziden Wirkstoffe oder das Antidot werden beispielsweise in Form von direkt versprühbaren Lösungen, Pulvern, Suspensionen, auch hochprozentige wäßrige, ölige oder sonstige Suspensionen, oder Dispersionen, Emulsionen, sulfatierter Hexa-, Hepta- und Octadecanolen, sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Die Formulierungen enthalten zwischen 0,01 und 95 Gew.%, vorzugsweise zwischen 0,5 und 95 Gew.% der Mischung aus Antidot und herbizidem Wirkstoff. Das Antidot und der herbizide Wirkstoff werden dabei in einer Reinheit von 90 % bis 100 %, vorzugsweise 95 % bis 100 % (nach NMR-Spektrum) eingesetzt.

Anwendungsbeispiel

Der Einfluß verschiedener Vertreter der erfindungsgemäßen herbiziden Mittel bzw. Mittelkombination, bestehend aus herbizidem Wirkstoff und antidotisch wirkender Verbindung, auf das Wachstum von erwünschten und unerwünschten Pflanzen im Vergleich zum herbiziden Wirkstoff allein wird durch biologische Beispiele aus Gewächshausversuchen belegt:

Als Kulturgefäße dienten Plastikblumentöpfe mit rund 300 $cm^3$ Inhalt und lehmiger Sand mit etwa 3,0 % Humus als Substrat. Die Samen der Testpflanzen werden nach Arten getrennt, flach eingesät und befeuchtet. Danach wurden die Gefäße mit durchsichtigen Plastikhauben abgedeckt, bis die Samen gleichmäßig gekeimt und die Pflanzen angewachsen waren.

Für die Nachauflaufbehandlung wurden die Testpflanzen je nach Wuchsform erst bis zu einer Wuchshöhe von 3 bis 20 cm angezogen und erst dann behandelt. Die herbiziden Mittel wurden hierbei in Wasser als Verteilungsmittel suspendiert oder emulgiert und mittels fein verteilender Düsen gespritzt.

Die Cyclohexenone der allgemeinen Struktur I wurden als 10 bis 20 % EC-Formulierung (Emulsionskonzentrat) ebenfalls allein unter Zugabe der für die Antidots nötigen Lösungsmittelmengen (80 % Cyclohexenon + 20 % Emulgator) appliziert.

Die antidotisch wirkende Verbindung 1,8-Naphthalindicarbonsäureanhydrid (NA) wurde für die Nachauflaufbehandlung in einem Gemisch, bestehend aus 80 % Cyclohexenon und 20 % Emulgator mit 10 Gew.-%

Wirkstoff aufbereitet.

| Liste der Testpflanzen: | |
|---|---|
| Lat. Name | Deutscher Name |
| Zea mays<br>Panicum miliaceum | Mais<br>Rispenhirse |

Die Versuchsgefäße wurden im Gewächshaus aufgestellt, wobei für wärmeliebende Arten 18 bis 30°C und für solche gemäßigter Klimate 10 bis 25°C bevorzugt wurden.

Die Versuchsperiode erstreckte sich über 3 bis 5 Wochen. Während dieser Zeit wurden die Pflanzen gepflegt, und ihre Reaktion auf die einzelnen Behandlungen wurde erfaßt.

Bewertet wurde die Schädigung durch die chemischen Mittel anhand einer Skala von 0 bis 100 % im Vergleich zu unbehandelten Kontrollpflanzen. Dabei bedeutet 0 keine Schädigung und 100 eine völlige Zerstörung der Pflanzen.

Die anschließende Tabelle dokumentiert die antidotische Wirkung der erfindungsgemäßen Beispielsverbindungen.

Dabei verbessert die antidotische Beispielsverbindung NA deutlich die Verträglichkeit des Herbizids I.010 für zu der Familie der Gramineen (Gräser) zählende Kulturpflanzen.

Tabelle

Verbesserung der Verträglichkeit des herbiziden Wirkstoffs I.010 für Mais durch Zumischen von 1,8-Naphthalindicarbonsäureanhydrid (NA) bei Nachauflaufanwendung

| Aufwandmenge [kg/ha] | | Testpflanzen und Schädigung [%] | |
|---|---|---|---|
| | | Kulturpflanze | unerwünschte Pflanze |
| I.010 | NA | Zea mays | Panicum miliaceum |
| 0,125 | - | 70 | 100 |
| 0,125 | 0,5 | 20 | 100 |

**Patentansprüche**

**1.** Herbizide Mittel, enthaltend 1,8-Naphthalindicarbonsäureanhydrid und mindestens einen herbiziden Wirkstoff aus der Gruppe der Cyclohexenone der Formel I,

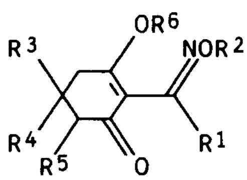

I

in welcher die Substituenten folgende Bedeutung haben:

$R^1$ eine $C_1$-$C_4$-Alkylgruppe;

$R^2$ eine $C_1$-$C_4$-Alkylgruppe; eine $C_3$-$C_4$-Alkenylgruppe, welche ein bis drei Halogenatome kann;

eine $C_3$-$C_4$-Alkinylgruppe; eine Thenylgruppe, welche ein Halogenatom tragen kann;

oder einen Rest

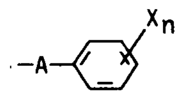

in dem

A eine $C_4$-Alkylen- oder $C_4$-Alkenylenkette bedeutet, wobei diese Ketten ein bis drei $C_1$-$C_3$-Alkylgruppen und ein bis drei Halogenatome oder wobei diese Ketten ein bis drei $C_1$-$C_3$-Alkylgruppenoder ein bis drei Halogenatome tragen können;

X Nitro; Cyano; Carboxyl; Halogen; $C_1$-$C_4$-Alkyl; $C_1$-$C_4$-Alkoxy; $C_1$-$C_4$-Alkylthio; partiell oder vollständig halogeniertes $C_1$-$C_4$-Alkyl; partiell oder vollständig halogeniertes $C_1$-$C_4$-Alkoxy; $C_1$-$C_4$-Alkoxycarbonyl; Benzyloxycarbonyl und Phenyl bedeutet, wobei diearomatischen Reste ein bis drei der folgenden Gruppen tragen können: Nitro, Cyano, Carboxyl, Halogen, $C_1$-$C_4$-Alkyl, $C_1$-$C_4$-Alkoxy, $C_1$-$C_4$-Alkylthio, partiell oder vollständig halogeniertes $C_1$-$C_4$-Alkyl, partiell oder vollständig halogeniertes $C_1$-$C_4$-Alkoxy, $C_1$-$C_4$-Alkoxycarbonyl und Benzyloxycarbonyl und

n 0, 1, 2 oder 3 bedeutet oder 1 bis 5 für den Fall, daß X für Halogenatome steht, wobei die Reste X verschieden sein können, wenn n größer als 1 ist;

$R^3$ eine $C_1$-$C_4$-Alkylgruppe, welche ein- oder zweifach durch $C_1$-$C_4$-Alkylthio oder $C_1$-$C_4$-Alkoxy substituiert sein kann;

ein 5- oder 6-gliedriges gesättigtes oder einfach ungesättigtes Ringsystem, welches neben Kohlenstoffgliedern ein Sauerstoff-, ein Schwefelatom oder eine Sulfoxid- oder Sulfongruppe enthalten kann, und dieser Ring ein bis drei der folgenden Reste tragen kann: Hydroxy, Halogen, $C_1$-$C_4$-Alkyl, partiell oder vollständig halogeniertes $C_1$-$C_4$-Alkyl, $C_1$-$6_4$-Alkoxy und $C_1$-$C_4$-Alkylthio;

die Phenylgruppe, die Pyridylgruppe, die Pyrrolylgruppe, die Furylgruppe, die Thienylgruppe, die Imidazolylgruppe, die Pyrazolylgruppe, die Isoxazolylgruppe, die Isothiazolylgruppe, die Oxazolylgruppe, die Thiazolylgruppe, die Oxadiazolylgruppe, die Thiadiazolylgruppe, wobei diese Reste ein bis drei der folgenden Gruppen tragen können: $C_1$-$C_4$-Alkyl, partiell oder vollständig halogeniertes $C_1$-$C_4$-Alkyl, $C_1$-$C_4$-Alkoxy, $C_1$-$C_4$-Alkylthio, $C_3$-$C_6$-Alkenyloxy, $C_3$-$C_6$-Alkinyloxy, Di-($C_1$-$C_4$)-alkoxy-$C_1$-$C_3$-alkyl, Formyl, Halogen und Benzoylamino;

$R^4$ Wasserstoff, Hydroxy oder, wenn $R^3$ für eine $C_1$-$C_6$-Alkylgruppe steht, eine $C_1$-$C_6$-Alkylgruppe;

$R^5$ Wasserstoff, die Cyanogruppe, ein Halogenatom, eine $C_1$-$C_4$-Alkoxycarbonylgruppe oder eine $C_1$-$C_4$-Alkylketoximgruppe und

$R^6$ Wasserstoff oder das Äquivalent eines landwirtschaftlich brauchbaren Kations,

wobei $R^3$ nicht für 2-(Ethylthio)propyl steht, wenn $R^1$ Propyl und $R^2$ Ethyl bedeutet.

**2.** Herbizides Mittel nach Anspruch 1, dadurch gekennzeichnet, daß das Anteilsverhältnis Cyclohexenon : 1,8-Naphthalindicarbonsäureanhydrid 10:1 bis 0,01:1 Gew.-Teile beträgt.

**3.** Verfahren zur selektiven Bekämpfung von unerwünschtem Pflanzenwuchs, dadurch gekennzeichnet, daß man ein Cyclohexenon der Formel I gemäß Anspruch 1 und 1,8-Naphthalindicarbonsäureanhydrid bei oder nach der Aussaat der Kulturpflanzen, vor oder während des Auflaufens der Kulturpflanzen gleichzeitig oder nacheinander in beliebiger Reihenfolge ausbringt.

**4.** Verfahren zur Verhinderung von Schädigungen von Kulturpflanzen durch herbizide Cyclohexenone der Formel I gemäß Anspruch 1, dadurch gekennzeichnet, daß man das Saatgut der Kulturpflanzen mit einer antidotisch wirksamen Menge an 1,8-Naphthalindicarbonsäureanhydrid behandelt.

**5.** Verfahren nach den Ansprüchen 3 oder 4, dadurch gekennzeichnet, daß die Kulturpflanzen Gerste, Weizen, Mais, Kultursorghum und Reis sind.